# FASCICULE DE BREVET EUROPEEN

(11) **EP 1 436 067 B1**
(45) Date de publication et mention de la délivrance du brevet: **05.04.2006**
(21) Numéro de dépôt: 02800643.5
(22) Date de dépôt: 09.10.2002
(51) Int. Cl.: B01D 53/04, F25J 3/04

(54) **PROCEDE ET APPAREIL DE TRAITEMENT D'UN GAZ PAR ADSORPTION, NOTAMMENT D'EPURATION D'AIR ATMOSPHERIQUE**
VERFAHREN UND VORRICHTUNG ZUR BEHANDLUNG EINES GASES DURCH ADSORPTION, INSBESONDERE ZUR REINGUNG VON ATMOSPHÄRISCHER LUFT
METHOD AND APPARATUS FOR TREATING A GAS BY ADSORPTION IN PARTICULAR FOR PURIFYING ATMOSPHERIC AIR

(30) Priorité: 09.10.2001 FR 0112968
(43) Date de publication de la demande: 14.07.2004
(73) Titulaire: L'Air Liquide S. A. à Directoire et Conseil de Surveillance pour l'Etude et l'Exploitation des Procédés Georges Claude, 75321 Paris Cedex 07 (FR)
(72) Inventeur: WAGNER, Marc, F-94100 Saint Maur des Fosses (FR); NICLOUT, Norbert, F-88381 Archettes (FR)
(74) Mandataire: Mercey, Fiona Susan
(86) Numéro de dépôt international: PCT/FR2002/003433
(87) Numéro de publication internationale: WO 2003/031027

(56) Documents cités:
- EP-A- 0 456 575
- EP-A- 1 035 391
- US-A- 5 593 475

## Description

La présente invention concerne un dispositif et un procédé de traitement d'un gaz par adsorption dans un adsorbeur, du type comportant les étapes consistant à :
(a) comprimer le gaz à traiter ;
(b) faire circuler le gaz à traiter issu de l'étape (a) à travers un adsorbeur en phase d'adsorption ; et
(c) faire passer un courant de fluide de régénération à travers l'adsorbeur en phase de régénération et
c1) pendant une première partie de la phase de régénération de l'adsorbeur, on instaure dans un échangeur de chaleur un échange de chaleur indirect entre le gaz à traiter issu de l'étape (a) d'une part, et le courant de fluide de régénération d'autre part, de manière à refroidir le gaz à traiter issu de l'étape (a) et destiné à l'étape (b) et à réchauffer le fluide de régénération destiné à l'étape (c) ;
(c2) pendant une deuxième partie de la phase de régénération de l'adsorbeur, on fait passer le fluide de régénération dans l'adsorbeur sans lui faire subir l'échange thermique de l'étape (c1) ; et
(d) on effectue une réfrigération auxiliaire du gaz à traiter pendant ladite étape (c2).
   Un procédé de ce type est connu de US-A-5593475.

L'invention s'applique notamment à la séparation de l'air atmosphérique par distillation, ladite séparation comprenant une étape de compression de l'air en vue d'une étape ultérieure de refroidissement de cet air, ainsi qu'une étape d'épuration en eau et en gaz carbonique dudit air par circulation dans un adsorbeur en vue d'éviter la formation de glace et/ou de neige carbonique dans l'échangeur de chaleur amenant l'air aux températures de distillation cryogénique.

Lorsque le procédé considéré de traitement d'un gaz n'est pas occasionnel, mais qu'il est destiné, au contraire, à être répété, voire à fonctionner en continu, l'adsorbeur doit être régénéré périodiquement.

A cet effet, il est connu d'utiliser un gaz de régénération que l'on fait circuler dans l'adsorbeur. On utilise alors au moins deux adsorbeurs qui passent alternativement en phase d'adsorption et en phase de régénération.

Dans l'application visée, la distillation cryogénique produit un gaz résiduaire qui est sec et décarbonaté, et par conséquent apte à régénérer l'adsorbeur.

Le débit moyen disponible de fluide de régénération peut être limité. On peut également vouloir en limiter volontairement la consommation.

Aussi, il est connu d'améliorer le pouvoir régénérant du fluide de régénération en le chauffant, par exemple par des moyens de chauffage électrique ou par de la vapeur d'eau, avant de lui faire traverser l'adsorbeur.

Cette solution est cependant coûteuse dans la mesure où elle consomme de l'énergie.

Pour réduire la quantité d'énergie consommée et/ou du fluide de régénération consommé, pour un même résultat en termes de quantité et de qualité de traitement du gaz traité, le EP-A-0 456 575 propose (figure 3) un procédé du type précité dans lequel un échange de chaleur est prévu entre le gaz comprimé et le fluide de régénération de l'adsorbeur.

L'invention a pour but de perfectionner ce procédé connu pour lui permettre de réaliser la régénération en deux étapes successives, l'une avec du fluide de régénération chauffé sans rajouter un échangeur supplémentaire, l'autre avec du fluide de régénération non chauffé.

A cet effet, l'invention a pour objet un procédé de traitement du type précité caractérisé en ce que : le procédé comporte en outre une étape consistant à réchauffer additionnellement le fluide de régénération issu de l'étape (c1) au moyen d'un apport de chaleur auxiliaire, avant de faire passer ce fluide de régénération à travers l'adsorbeur ;

Suivant d'autres caractéristiques de ce procédé :
- ladite étape (d) de réfrigération auxiliaire consiste à réfrigérer le gaz à traiter par une source de froid auxiliaire ;
- ladite étape (d) de réfrigération auxiliaire consiste à réfrigérer le gaz à traiter par au moins une partie du courant de fluide de régénération qui a traversé l'adsorbeur ;
- on effectue ladite réfrigération auxiliaire dans l'échangeur de chaleur ;
- on effectue ladite réfrigération en dehors de l'échangeur de chaleur ;
- on maintient un débit de gaz à traiter et de fluide de régénération dans l'échangeur de chaleur pendant ladite étape (d) de réfrigération auxiliaire ;
- le procédé comporte en outre une étape consistant à refroidir additionnellement le gaz à traiter issu de l'étape (c1), avant de faire passer ce gaz à traiter à travers l'adsorbeur ;
- le gaz à traiter est de l'air atmosphérique, l'étape (b) a pour fonction d'épurer en eau et en gaz carbonique l'air à traiter issu de l'étape (a), ledit procédé comporte une étape supplémentaire consistant à séparer par distillation l'air issu de l'étape (b) pour produire au moins l'un de ses constituants ainsi qu'un gaz résiduaire, et le gaz résiduaire forme ledit fluide de régénération.

L'invention a également pour objet un appareil de traitement d'un gaz par adsorption, du type comprenant :
- un compresseur du gaz à traiter dont le refoulement est adapté pour être relié à l'entrée d'au moins un adsorbeur au cours d'une phase d'adsorption de celui-ci ;
- des moyens pour faire circuler un fluide de régénération dans l'adsorbeur au cours d'une phase de régénération de celui-ci ; et
- des moyens de chauffage du fluide de régénération entrant dans l'adsorbeur en régénération ;
   les moyens de chauffage comprenant un échangeur de chaleur adapté pour mettre en relation d'échange thermiqueindirect le fluide de régénération avec le gaz issu du compresseur, l'appareil comportant en outre des moyens de dérivation pour envoyer le fluide de régénération dans l'adsorbeur en régénération sans passer par l'échangeur de chaleur, et des moyens réfrigérants auxiliaires pour réfrigérer le gaz à traiter lorsque lesdits moyens de dérivation sont activés caractérisé en ce que les moyens de chauffage comportent en outre une source de chaleur auxiliaire (14) adaptée pour effectuer un chauffage additionnel du fluide de régénération.

L'invention sera mieux comprise à la lecture de la description qui va suivre, donnée uniquement à titre d'exemple et faite en se référant aux dessins annexés, sur lesquels :
- la Figure 1 représente schématiquement un appareil voisin de celui décrit dans le EP-A-0 456 575 précité, figure 3 ;
- la Figure 2 représente schématiquement une variante inédite de cet appareil ;
- la Figure 3 représente schématiquement une installation de séparation de l'air par voie cryogénique incorporant l'appareil de la Figure 1 ; et
- les Figures 4 à 6 représentent schématiquement trois variantes de réalisation de l'appareil suivant l'invention.

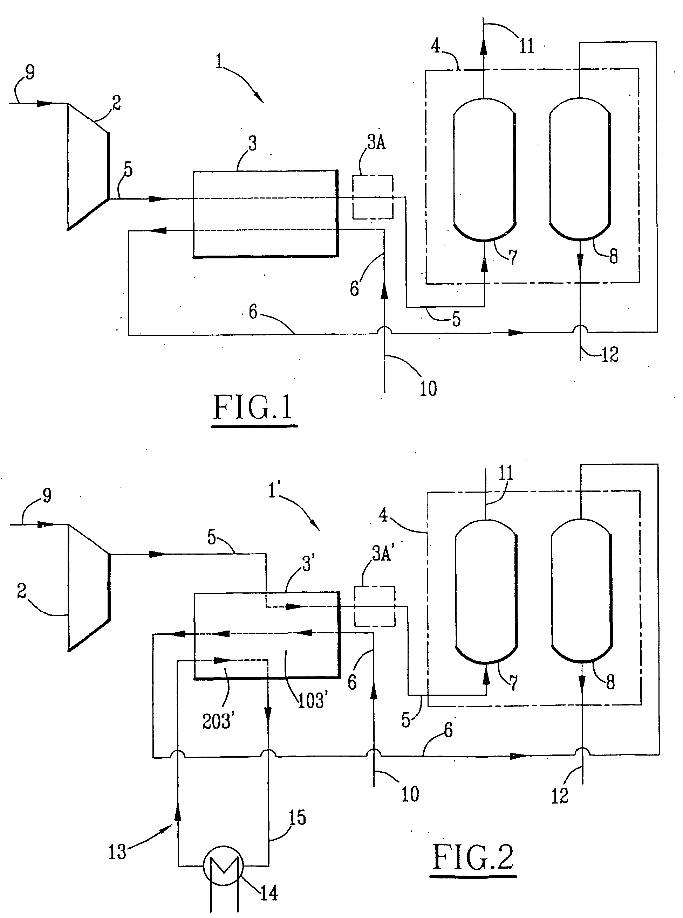

L'appareil 1 illustré sur la Figure 1 comporte un compresseur 2, un échangeur de chaleur 3 et une unité 4 d'adsorption. Une première canalisation 5 forme un circuit pour la circulation du gaz à traiter, reliant le compresseur 2, l'échangeur 3 et l'unité 4 d'adsorption. Elle est agencée de manière telle que le gaz à traiter, aspiré par le compresseur 2, est refoulé par celui-ci, puis traverse l'échangeur 3, puis l'unité 4 d'adsorption.

Une deuxième canalisation 6 destinée à transporter un fluide de régénération relie l'échangeur 3 et l'unité 4 d'adsorption. Elle est agencée de manière telle que le fluide de régénération traverse en premier l'échangeur 3, puis l'unité 4 d'adsorption.

L'unité 4 d'adsorption comporte des premier et deuxième 7 et 8 adsorbeurs identiques, ainsi qu'un dispositif de commutation non représenté, qui, dans une première position, relie le premier adsorbeur 7, fonctionnant alors en adsorption, à la première canalisation 5 d'une part, et le deuxième adsorbeur 8 à la deuxième canalisation 6 d'autre part, ce deuxième adsorbeur 8 étant alors régénéré par le fluide de régénération qui le traverse. Dans une deuxième position du dispositif de commutation, ces deux adsorbeurs 7 et 8 sont intervertis, le premier 7 étant en régénération, tandis que le deuxième 8 est dans un état actif d'adsorption.

Bien entendu, l'unité 4 d'adsorption peut comporter plus de deux adsorbeurs. Elle peut également n'en comporter qu'un seul, l'appareil 1 de traitement d'un gaz par adsorption étant alors muni d'au moins une capacité-tampon pour lui permettre de fonctionner d'une manière continue.

Sur la Figure 1, l'unité 4 d'adsorption est illustrée lorsque le dispositif de commutation est dans sa première position.

Avantageusement, l'échangeur 3 est du type à contre-courant, ainsi qu'on peut le voir sur la Figure 1.

Par ailleurs, cet échangeur 3, destiné à mettre en relation d'échange thermique indirect deux gaz, sera utilement du type à plaques brasées.

Le fluide de régénération circule à l'intérieur de la deuxième canalisation 6 de sorte qu'il traverse en premier l'échangeur 3 et ensuite l'unité 4 d'adsorption.

L'appareil 1 de traitement d'un gaz par adsorption qui vient d'être décrit est destiné à fonctionner de manière continue.

Le gaz à traiter entre dans l'appareil 1 par l'entrée 9 du gaz à traiter qui correspond à l'aspiration du compresseur 2. Il est ensuite comprimé par ce compresseur 2, et subit de ce fait une élévation de température. Sa température est alors supérieure à celle du fluide de régénération qui entre par l'entrée 10 de fluide de régénération dans le dispositif de traitement 1.

Le gaz à traiter et le fluide de régénération entrent alors chacun séparément dans l'échangeur 3, lors de la traversée duquel ils sont mis en relation d'échange thermique indirect à contre-courant, de manière à réchauffer le fluide de régénération, et à simultanément refroidir le gaz à traiter.

En sortie de l'échangeur 3, le gaz à traiter et le fluide de régénération s'acheminent chacun séparément par deux entrées distinctes dans l'unité 4 d'adsorption. A l'intérieur de l'unité 4 d'adsorption, le gaz à traiter et le fluide de régénération traversent respectivement l'un et l'autre des deux adsorbeurs 7 et 8, selon la position du dispositif de commutation. L'adsorbeur traversé par le gaz à traiter est actif, et fonctionne en adsorption, de manière à adsorber au moins un élément particulier présent dans le gaz à traiter. Simultanément, l'adsorbeur traversé par le fluide de régénération est pour sa part régénéré, à contre-courant par rapport au sens de circulation du gaz à traiter en phase d'adsorption.

Dans une étape ultérieure, les deux adsorbeurs 7 et 8 sont intervertis par le dispositif de commutation, de sorte que l'adsorbeur qui était en adsorption est régénéré, tandis que celui qui était en régénération devient actif et adsorbe au moins un constituant particulier du gaz à traiter qui le traverse.

L'utilisation d'au moins deux adsorbeurs permet donc un fonctionnement en continu, comme connu.

Le gaz traité, après avoir traversé l'un des deux adsorbeurs, ressort de l'appareil de traitement 1 par une sortie 11 du gaz traité, où il est disponible à l'état comprimé et épuré par adsorption.

Le gaz régénérant, pour sa part, s'échappe en 12 de l'appareil de traitement 1.

L'appareil 1' de traitement d'un gaz illustré sur la Figure 2, comporte sensiblement les mêmes éléments que celui, représenté sur la Figure 1, qui vient d'être commenté.

L'échangeur 3 seul a été remplacé par un échangeur 3' à triple circulation qui sera commenté ci-dessous. Les mêmes références sont conservées pour les éléments communs à ces deux variantes de réalisation de l'invention, ces éléments communs étant disposés les uns par rapport aux autres de la même manière dans les deux cas.

L'appareil comporte en outre des moyens 13 de chauffage supplémentaire du fluide de régénération.

En effet, le réchauffement du fluide de régénération par échange de chaleur avec le gaz à traiter peut s'avérer insuffisant pour la régénération complète d'un adsorbeur au cours de la totalité du cycle d'adsorption-régénération. Une première solution peut consister à augmenter le débit du fluide de régénération. Alternativement ou en supplément de cette première solution, il peut être prévu d'accroître la capacité de régénération du fluide de régénération en utilisant lesdits moyens 13 de chauffage supplémentaire.

L'échangeur 3' à triple circulation prend la place de l'échangeur 3.

Les moyens de chauffage supplémentaire 13 comportent une source de chaleur auxiliaire 14, par exemple électrique, reliée par un circuit 15 à la partie chaude de l'échangeur de chaleur 3'. Le circuit 15 forme une boucle fermée pour la circulation d'un fluide caloporteur entre ladite source de chaleur auxiliaire 14 et l'échangeur 3'.

Des moyens non représentés mettent en mouvement le fluide caloporteur à l'intérieur du circuit 15. Avantageusement, comme représenté, la circulation du fluide caloporteur à l'intérieur de l'échangeur 3' est orientée dans le sens contraire de l'écoulement du fluide de régénération, pour un fonctionnement en échangeur à contre-courant.

La configuration de l'échangeur à triple circulation 3' illustrée sur la Figure 2, est telle que le fluide de régénération est d'abord réchauffé par échange de chaleur à contre-courant avec le seul gaz à traiter, dans la partie froide 103' de l'échangeur, puis, dans un second temps, réchauffé par échange de chaleur à contre-courant avec le seul fluide caloporteur dans la partie chaude 203' de l'échangeur.

Cette variante reproduit le fonctionnement de l'appareil de traitement 1 de la figure 1, lequel fonctionnement comporte toutefois une étape supplémentaire dans laquelle le fluide de régénération, après avoir été réchauffé par échange de chaleur avec le gaz à traiter, est de nouveau soumis à un échange de chaleur avec les moyens de chauffage supplémentaires 13, pour élever plus encore sa température et accroître ainsi sa capacité de régénération. Dans ce but, les moyens de chauffage 14 transmettent une certaine quantité de chaleur au fluide caloporteur, qui, à son tour, restitue cette quantité de chaleur au fluide de régénération au niveau de l'échangeur à triple circulation 3'.

En variante, les moyens de chauffage 14 peuvent être directement disposés sur la deuxième canalisation 6 qui transporte le fluide de régénération, l'échangeur à triple circulation 3' se ramenant alors à un simple échangeur 3 du type de celui de la figure 1.

De plus, dans l'une ou l'autre des deux variantes qui viennent d'être commentées, des moyens de refroidissement supplémentaires du gaz à traiter peuvent être prévus, lesquels seront avantageusement placés entre l'échangeur de chaleur 3 ou 3' et l'unité 4 d'adsorption, comme indiqué en traits mixtes en 3A et 3'A sur les Figures 1 et 2. L'étape supplémentaire ainsi obtenue de refroidissement du gaz à traiter favorise alors le phénomène d'adsorption.

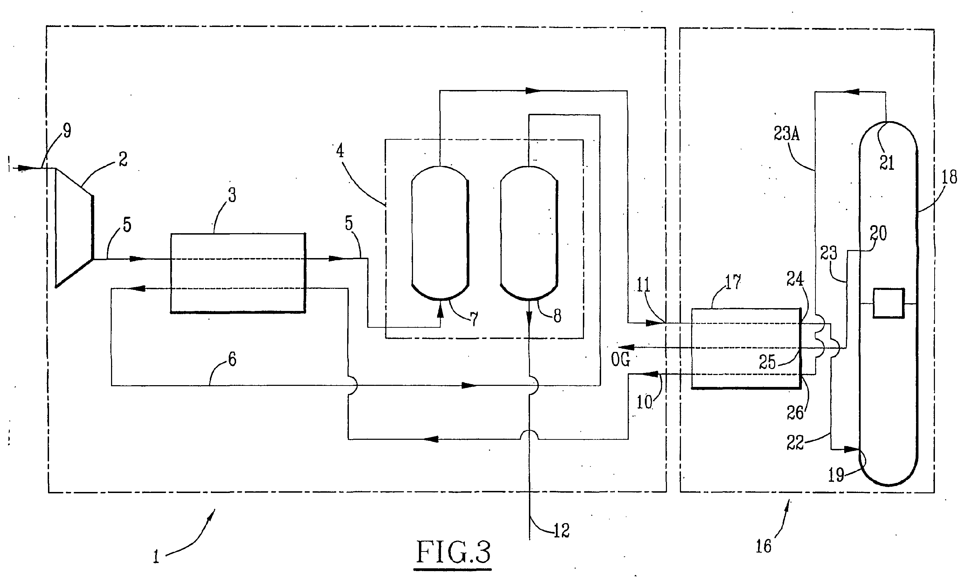

La Figure 3 représente schématiquement une installation de séparation de l'air par voie cryogénique pour produire notamment de l'oxygène. Elle incorpore, disposé en tête, l'appareil de traitement 1 de la figure 1, qui est connecté sur ce que l'on désigne communément sous le vocable de boîte froide 16.

Ladite boîte froide 16 comporte une ligne d'échange thermique 17 à contre-courant et une double colonne de distillation 18. La double colonne 18 présente une entrée 19 pour l'alimentation en air de sa colonne moyenne pression, et une sortie 20 de production d'oxygène gazeux et une sortie 21 pour le gaz résiduaire (azote impur), prévues sur sa colonne basse pression. L'entrée 19 et les sorties 20 et 21 sont respectivement reliées au moyen de canalisations 22, 23 et 23A à la sortie d'air 24, à l'entrée d'oxygène 25 et à l'entrée de gaz résiduaire 26 du bout froid de l'échangeur 17. Les autres parties de la boîte froide 16, connues en soi, n'ont pas été représentées.

L'entrée 9 de l'appareil de traitement 1 est reliée à une prise d'air atmosphérique. La sortie 11 de ce même appareil 1, au niveau de laquelle on récupère l'air comprimé, sec et décarbonaté, est reliée à celle des entrées de l'échangeur 17, au bout chaud de celui-ci, qui communique avec la sortie 24.

Le gaz résiduaire qui sort en 23 de la double colonne 18 se trouve, comme connu, à une légère surpression, ce qui lui permet de traverser un certain nombre d'éléments dans lesquels sa pression va diminuer jusqu'à son évacuation finale à l'atmosphère. En sortie d'échangeur 17, le gaz résiduaire 19 présente les qualités d'un gaz régénérant dans la mesure où il est sec, décarbonaté et décomprimé. Aussi, la sortie de l'échangeur 17 par laquelle s'échappe le gaz résiduaire est reliée à l'entrée 10 pour le gaz de régénération de l'appareil de traitement 1, le gaz résiduaire étant utilisé en fluide de régénération. Il convient de noter qu'à ce niveau, le gaz résiduaire se trouve à une température inférieure à celle de l'air sortant du compresseur 2. Aussi, lors de sa traversée de l'échangeur 3, il sera réchauffé, ce qui aura pour effet d'accroître sa capacité de régénération.

Le fonctionnement de l'appareil de traitement 1 reste inchangé par ailleurs.

La circulation des fluides à l'intérieur de l'installation de séparation de l'air par voie cryogénique qui vient d'être commentée est engendrée par la pression motrice produite par le compresseur 2.

On notera en premier lieu qu'en plaçant l'adsorbeur sur le parcours du gaz à traiter après le compresseur, le phénomène d'adsorption est favorisé en raison de la compression de ce gaz à traiter. Cependant, l'élévation de température de ce gaz à traiter en raison de cette compression aurait, quant à elle, comme effet de réduire l'efficacité de l'adsorption.

L'introduction d'un échangeur 3 de chaleur ayant pour but d'une part d'augmenter la température du fluide de régénération, et d'autre part de diminuer la température du gaz à traiter, permet de façon particulièrement économique d'obtenir un double gain sur l'efficacité du cycle d'adsorption et de régénération. En effet, l'augmentation de la température du fluide de régénération va favoriser la régénération de l'adsorbeur, et l'efficacité de l'adsorption est améliorée en raison du refroidissement du gaz à traiter durant sa traversée de l'échangeur 3.

En variante, l'échangeur 3 ou 3' peut être à courants croisés, ce qui peut permettre une meilleure optimisation des tuyauteries et/ou des pertes de charges et/ou de l'évacuation des condensats.

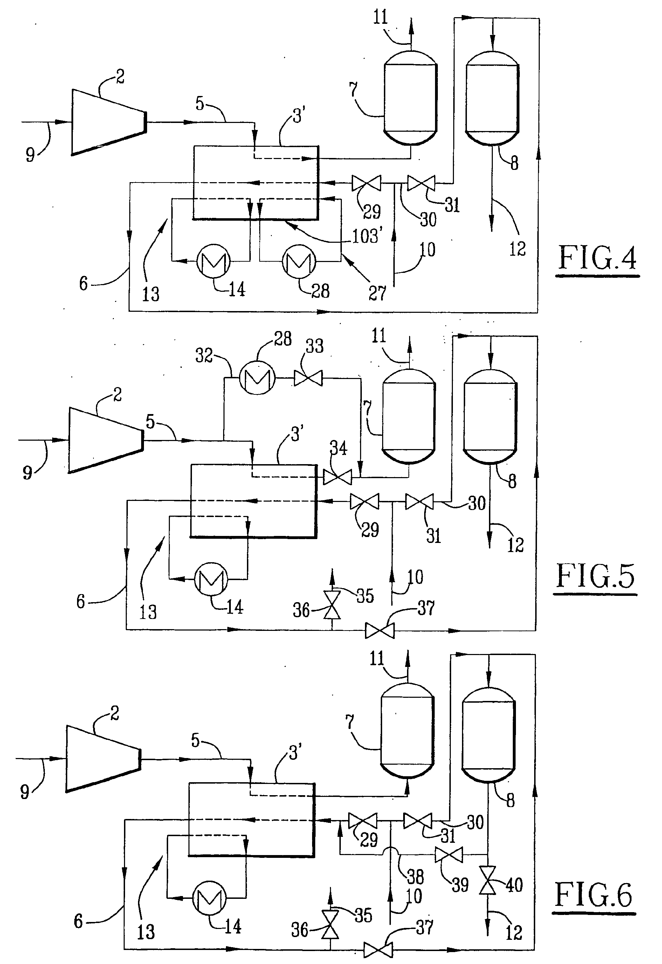

La Figure 4 représente un appareil de traitement suivant l'invention, qui diffère de celui de la Figure 2 sous deux aspects.

D'une part, la partie froide 103' est munie d'un circuit réfrigérant auxiliaire 27, lui-même réfrigéré par une source extérieure de froid 28. Dans ce circuit, le fluide frigorigène circule à contre-courant du gaz à traiter.

D'autre part, la ligne 10 est munie, avant son entrée au bout froid de l'échangeur 3', d'une vanne 29, et, en amont de celle-ci, d'un embranchement 30 qui mène à l'ouverture supérieure de l'un ou l'autre des adsorbeurs 7 et 8 et qui est équipé d'une vanne 31.

Lorsque l'adsorbeur en régénération (ici l'adsorbeur 8) doit être parcouru par du fluide de régénération chaud, la vanne 31 est fermée, la vanne 29 est ouverte, le circuit réfrigérant 27 n'est pas en service, et le circuit de chauffage 13 est en service. Le fonctionnement est alors identique à celui décrit plus haut en regard de la Figure 2.

Lorsque, dans une phase ultérieure de la régénération de l'adsorbeur 8, celui-ci doit être parcouru par du fluide de régénération froid, on inverse les vannes 29 et 31, de sorte que le fluide de régénération passe directement dans l'adsorbeur via la conduite 30.

En même temps, le circuit de chauffage est arrêté, et le circuit réfrigérant 27 est mis en service. Ainsi, c'est ce dernier qui assure la réfrigération de l'air comprimé traversant l'échangeur 3'.

De cette manière, le régime thermique de l'échangeur 3' varie peu, ce qui diminue les phénomènes de fatigue thermique, notamment s'il s'agit d'un échangeur du type à plaques brasées en aluminium.

La variante de la Figure 5 diffère de la précédente par la suppression du circuit réfrigérant 27 et par l'installation de la source de froid 28 sur une dérivation 32 de la conduite 5, partant en amont et débouchant en aval de l'échangeur 3'. Cette dérivation est équipée d'une vanne 33, et une autre vanne 34 est ajoutée sur la conduite 5, entre le bout froid de l'échangeur 3' et le débouché de la dérivation 32. De plus, une conduite 35 est piquée sur la conduite 6. Deux vannes 36 et 37, prévues respectivement sur les conduites 35 et 6, permettent de diriger le fluide de régénération issu de l'échangeur 3' soit vers l'adsorbeur en régénération, soit vers l'évacuation.

Ainsi, lorsque c'est du fluide de régénération froid qui traverse l'adsorbeur 8 en régénération, la vanne 34 est fermée tandis que la vanne 33 est ouverte, de sorte que l'air est refroidi par la source de froid 28. Pour obtenir le même avantage de réduction de la fatigue thermique de l'échangeur que dans le cas de la Figure 4, pendant la régénération de l'adsorbeur 8 par du fluide de régénération froid, on maintient à travers l'échangeur 3' un faible débit de gaz à traiter et de fluide de régénération, ce dernier étant évacué via la conduite 35, par manoeuvre des vannes 36 et 37.

La variante de la Figure 6 diffère de la précédente d'une part par la suppression des éléments 28, 32, 33 et 34, et d'autre part par l'ajout d'une conduite 38 reliant la conduite 12 au bout froid du passage de fluide réfrigérant de l'échangeur 3'. Cette conduite 38 est équipée d'une vanne 39, et une autre vanne 40 est prévue dans la conduite 12, en aval de la conduite 35.

Dans cette variante, lorsque c'est du fluide de régénération froid qui traverse l'adsorbeur 8 en régénération, on ferme la vanne 40 et on ouvre la vanne 39, de sorte que le fluide de régénération sortant de l'adsorbeur traverse l'échangeur 3. Ce débit sert comme précédemment à refroidir le gaz à traiter comprimé, puis il est évacué via la conduite 35.

De même que dans le cas des Figures 4 et 5, on réduit les phénomènes de fatigue thermique de l'échangeur.

Dans les Figures 4 à 6, l'appareil comporte en outre des moyens 13 de chauffage supplémentaire du fluide de régénération.

En effet, le réchauffement du fluide de régénération par échange de chaleur avec le gaz à traiter s'avère insuffisant pour la régénération complète d'un adsorbeur au cours de la totalité du cycle d'adsorption-régénération. Une première solution peut consister à augmenter le débit du fluide de régénération. Alternativement ou en supplément de cette première solution, il est prévu d'accroître la capacité de régénération du fluide de régénération en utilisant lesdits moyens 13 de chauffage supplémentaire.

L'échangeur 3' à triple circulation prend la place de l'échangeur 3 de la Figure 1.

Les moyens de chauffage supplémentaire 13 comportent une source de chaleur auxiliaire 14, par exemple électrique, reliée par un circuit 15 à la partie chaude de l'échangeur de chaleur 3'. Le circuit 15 forme une boucle fermée pour la circulation d'un fluide caloporteur entre ladite source de chaleur auxiliaire 14 et l'échangeur 3'.

Des moyens non représentés mettent en mouvement le fluide caloporteur à l'intérieur du circuit 15. Avantageusement, comme représenté, la circulation du fluide caloporteur à l'intérieur de l'échangeur 3' est orientée dans le sens contraire de l'écoulement du fluide de régénération, pour un fonctionnement en échangeur à contre-courant.

La configuration de l'échangeur à triple circulation 3' illustrée sur les Figures 4 à 6, est telle que le fluide de régénération est d'abord réchauffé par échange de chaleur à contre-courant avec le seul gaz à traiter, dans la partie froide 103' de l'échangeur, puis, dans un second temps, réchauffé par échange de chaleur à contre-courant avec le seul fluide caloporteur dans la partie chaude 203' de l'échangeur.

## Revendications

1. Procédé de traitement d'un gaz par adsorption dans un adsorbeur (7, 8), du type comportant les étapes consistant à :
(a) comprimer le gaz à traiter ;
(b) faire circuler le gaz à traiter issu de l'étape (a) à travers un adsorbeur (7, 8) en phase d'adsorption ; et
(c) faire passer un courant de fluide de régénération à travers l'adsorbeur (7, 8) en phase de régénération,
(c1) pendant une première partie de la phase de régénération de l'adsorbeur, on instaure dans un échangeur de chaleur (3, 3') un échange de chaleur indirect entre le gaz à traiter issu de l'étape (a) d'une part, et le courant de fluide de régénération d'autre part, de manière à refroidir le gaz à traiter issu de l'étape (a) et destiné à l'étape (b) et à réchauffer le fluide de régénération destiné à l'étape (c) ;
(c2) pendant une deuxième partie de la phase de régénération de l'adsorbeur, on fait passer le fluide de régénération dans l'adsorbeur (7, 8) sans lui faire subir l'échange thermique de l'étape (c1) ; et
(d) on effectue une réfrigération auxiliaire du gaz à traiter pendant ladite étape (c2)
**caractérisé en ce qu'**il comporte en outre une étape consistant à réchauffer additionnellement le fluide de régénération issu de l'étape (c1) au moyen d'un apport de chaleur auxiliaire, avant de faire passer ce fluide de régénération à travers l'adsorbeur (7, 8).

2. Procédé suivant la revendication 1, **caractérisé en ce que** ladite étape (d) de réfrigération auxiliaire consiste à réfrigérer le gaz à traiter par une source de froid auxiliaire (28).

3. Procédé suivant la revendication 1, **caractérisé en ce que** ladite étape (d) de réfrigération auxiliaire consiste à réfrigérer le gaz à traiter par au moins une partie du courant de fluide de régénération qui a traversé l'adsorbeur.

4. Procédé selon l'une quelconque des revendications 1 à 3, **caractérisé en ce qu'**on effectue ladite réfrigération auxiliaire dans l'échangeur de chaleur (3').

5. Procédé selon l'une quelconque des revendications 1 à 3, **caractérisé en ce qu'**on effectue ladite réfrigération en dehors de l'échangeur de chaleur (3').

6. Procédé selon la revendication 5, **caractérisé en ce qu'**on maintient un débit de gaz à traiter et de fluide de régénération dans l'échangeur de chaleur (3') pendant ladite étape (d) de réfrigération auxiliaire.

7. Procédé selon l'une quelconque des revendications 1 à 6, **caractérisé en ce qu'**il comporte en outre une étape consistant à refroidir additionnellement le gaz à traiter issu de l'étape (c1), avant de faire passer ce gaz à traiter à travers l'adsorbeur (7, 8).

8. Procédé selon l'une quelconque des revendications 1 à 7, **caractérisé en ce que** le gaz à traiter est de l'air atmosphérique, **en ce que** l'étape (b) a pour fonction d'épurer en eau et en gaz carbonique l'air à traiter issu de l'étape (a), **en ce que** ledit procédé comporte une étape supplémentaire consistant à séparer par distillation l'air issu de l'étape (b) pour produire au moins l'un de ses constituants ainsi qu'un gaz résiduaire, et **en ce que** le gaz résiduaire forme ledit fluide de régénération.

9. Appareil de traitement d'un gaz par adsorption, du type comprenant :
- un compresseur (2) du gaz à traiter dont le refoulement est adapté pour être relié à l'entrée d'au moins un adsorbeur (7, 8) au cours d'une phase d'adsorption de celui-ci ;
- des moyens pour faire circuler un fluide de régénération dans l'adsorbeur (7, 8) au cours d'une phase de régénération de celui-ci, et
- des moyens de chauffage du fluide de régénération entrant dans l'adsorbeur (7, 8) en régénération,
les moyens de chauffage comprenant un échangeur de chaleur (3 ; 3') adapté pour mettre en relation d'échange thermique indirect le fluide de régénération avec le gaz issu du compresseur (2), en ce que l'appareil comporte en outre des moyens de dérivation (30) pour envoyer le fluide de régénération dans l'adsorbeur (7, 8) en régénération sans passer par l'échangeur de chaleur (3'), et des moyens réfrigérants auxiliaires (28 ; 38) pour réfrigérer le gaz à traiter lorsque lesdits moyens de dérivation (30) sont activés
**caractérisé en ce que** les moyens de chauffage comportent en outre une source de chaleur auxiliaire (14) adaptée pour effectuer un chauffage additionnel du fluide de régénération.

10. Appareil selon la revendication 9, **caractérisé en ce que** les moyens réfrigérants auxiliaires comprennent une source de froid auxiliaire (28) pour au moins la partie froide de l'échangeur de chaleur (3').

11. Appareil selon la revendication 9, **caractérisé en ce que** les moyens réfrigérants auxiliaires comprennent une dérivation (32) du circuit (5) de gaz à traiter, montée aux bornes de l'échangeur de chaleur (3'), munie d'une source de froid auxiliaire (28).

12. Appareil selon la revendication 9, **caractérisé en ce que** les moyens réfrigérants auxiliaires comprennent une conduite (38) de renvoi dans l'échangeur de chaleur (3') du fluide de régénération ayant traversé l'adsorbeur (7, 8) en régénération.

13. Appareil selon l'une des revendication 9 à 12, **caractérisé en ce que** la source de chaleur auxiliaire (14) est adaptée pour chauffer additionnellement au moins la partie chaude de l'échangeur de chaleur (3').

14. Appareil selon l'une quelconque des revendications 9 à 13, **caractérisé en ce qu'**il comporte en outre des moyens de refroidissement additionnel (3A ; 3A') du gaz à traiter placés entre l'échangeur de chaleur (3 ; 3') et l'adsorbeur (7, 8).

15. Appareil selon l'une quelconque des revendications 9 à 13 , **caractérisé en ce que** l'ensemble qui va du compresseur (2) à l'adsorbeur (7, 8) se trouve en tête d'une installation de séparation d'air par distillation pour produire au moins l'un des constituants de l'air, **en ce que** l'adsorbeur (7, 8) est destiné à épurer en eau et en gaz carbonique l'air à traiter, et **en ce que** le fluide de régénération est formé d'un gaz résiduaire produit par cette installation de séparation.

## Claims

1. Process for treating a gas by adsorption in an adsorber (7, 8), of the type comprising the steps consisting in:
(a) compressing the gas to be treated;
(b) making the gas to be treated coming from step (a) flow through an adsorber (7, 8) in adsorption phase; and
(c) making a stream of regeneration fluid flow through the adsorber (7, 8) in the regeneration phase,
(c1) during a first part of the adsorber regeneration phase, indirect heat exchange between, on the one hand, the gas to be treated coming from step (a) and, on the other hand, the refrigeration fluid stream is established in a heat exchanger (3, 3') so as to cool the gas to be treated coming from step (a) and intended for step (b) and to heat the regeneration fluid intended for step (c);
(c2) during a second part of the adsorber regeneration phase, the regeneration fluid is made to flow through the adsorber (7, 8) without making it undergo the heat exchange of step (c1); and
(d) auxiliary refrigeration of the gas to be treated during said step (c2) is carried out,
**characterized in that** it further includes a step consisting in additionally heating the regeneration fluid coming from step (c1) by means of an auxiliary heat injection, before this regeneration fluid is made to pass through the adsorber (7, 8).

2. Process according to Claim 1, **characterized in that** said auxiliary refrigeration step (d) consists in refrigerating the gas to be treated by an auxiliary cold source (28).

3. Process according to Claim 1, **characterized in that** said auxiliary refrigeration step (d) consists in refrigerating the gas to be treated by at least one part of the stream of regeneration fluid that has passed through the adsorber.

4. Process according to any one of Claims 1 to 3, **characterized in that** said auxiliary refrigeration is carried out in the heat exchanger (3').

5. Process according to any one of Claims 1 to 3, **characterized in that** said refrigeration is carried out outside the heat exchanger (3').

6. Process according to Claim 5, **characterized in that** a flow of gas to be treated and of regeneration fluid is maintained in the heat exchanger (3') during said auxiliary refrigeration step (d).

7. Process according to any one of Claims 1 to 6, **characterized in that** it further includes a step consisting in additionally cooling the gas to be treated coming from step (c1), before this gas to be treated is made to pass through the adsorber (7, 8).

8. Process according to any one of Claims 1 to 7, **characterized in that** the gas to be treated is atmospheric air, **in that** the function of step (b) is to strip water and carbon dioxide from the air to be treated coming from step (a), **in that** said process includes an additional step consisting in separating the air coming from step (b) by distillation in order to produce at least one of its constituents and also a waste gas, and **in that** the waste gas forms said regeneration fluid.

9. Apparatus for treating a gas by adsorption, of the type comprising:
- a compressor (2) for compressing the gas to be treated, the delivery side of which compressor is designed to be connected to the inlet of at least one adsorber (7, 8) during an adsorption phase of the latter;
- means for making a regeneration fluid flow through the adsorber (7, 8) during a regeneration phase of the latter; and
- means for heating the regeneration fluid entering the adsorber (7, 8) in regeneration mode,
the heating means comprising a heat exchanger (3; 3') designed to bring the regeneration fluid into indirect heat exchange relationship with the gas coming from the compressor (2), and the apparatus further including branch-off means (30) for sending the regeneration fluid into the adsorber (7, 8) in regeneration mode without passing through the heat exchanger (3'), and auxiliary refrigerating means (28; 38) for refrigerating the gas to be treated when said branch-off means (30) are activated,
**characterized in that** the heating means further include an auxiliary heat source (14) designed to carry out additional heating on the regeneration fluid.

10. Apparatus according to Claim 9, **characterized in that** the auxiliary refrigeration means comprise an auxiliary cold source (28) for at least the cold part of the heat exchanger (3').

11. Apparatus according to Claim 9, **characterized in that** the auxiliary refrigerating means comprise a branch-off (32) from the circuit (5) for gas to be treated, that branch-off being mounted across the terminals of the heat exchanger (3') and provided with an auxiliary cold source (28).

12. Apparatus according to Claim 9, **characterized in that** the auxiliary refrigerating means comprise a return line (38) for returning the regeneration fluid to the heat exchanger (3') after said fluid has passed through the adsorber (7, 8) in regeneration mode.

13. Apparatus according to one of Claims 9 to 12, **characterized in that** the auxiliary heat source (14) is designed to provide additional heat for at least the hot part of the heat exchanger (3').

14. Apparatus according to any one of Claims 9 to 13, **characterized in that** it further includes additional cooling means (3A; 3A') for cooling the gas to be treated, these means being placed between the heat exchanger (3; 3') and the adsorber (7, 8).

15. Apparatus according to any one of Claims 9 to 13, **characterized in that** the assembly starting from the compressor (2) to the adsorber (7, 8) is placed upstream of an air separation installation for producing at least one of the constituents of air by distillation, **in that** the adsorber (7, 8) is intended to strip water and carbon dioxide from the air to be treated, and **in that** the regeneration fluid is formed from a waste gas produced by this separation installation.

## Patentansprüche

1. Verfahren zum Behandeln eines Gases durch Adsorption in einem Adsorber (7, 8) des Typs, der die Schritte aufweist, die darin bestehen:
(a) das zu behandelnde Gas zu verdichten,
(b) das zu behandelnde Gas, das aus dem Schritt (a) hervorgeht, durch einen Adsorber (7, 8) in Adsorptionsphase zirkulieren zu lassen, und
(c) einen Regenerationsfluidstrom durch den Adsorber (7, 8) in Regenerationsphase fließen zu lassen,
(c1) während eines ersten Teils der Regenerationsphase des Adsorbers in einem Wärmeaustauscher (3, 3') einen indirekten Wärmeaustausch zwischen dem zu behandelnden Gas, das aus dem Schritt (a) stammt einerseits, und dem Regenerationsfluidstrom andererseits so einzurichten, dass das aus dem Schritt (a) stammende zu behandelnde Gas, das für den Schritt (b) bestimmt ist, abgekühlt wird und das für den Schritt (c) bestimmte Regenerationsfluid erwärmt wird,
(c2) während eines zweiten Teils der Regenerationsphase des Adsorbers das Regenerationsfluid in dem Adsorber (7, 8) durchgehen zu lassen, ohne es dem Wärmeaustausch des Schritts (c1) zu unterziehen, und
(d) eine Hilfskühlung des zu behandelnden Gases während des Schritts (c2) durchzuführen,
**dadurch gekennzeichnet, dass** es ferner einen Schritt aufweist, der darin besteht, das Regenerationsfluid, das aus dem Schritt (c1) stammt, mittels einer Zufuhr von Hilfswärme zu erwärmen, bevor man dieses Regenerationsfluid durch den Adsorber (7, 8) laufen lässt.

2. Verfahren nach Anspruch 1, **dadurch gekennzeichnet, dass** der Schritt (d) des Hilfskühlens darin besteht, das zu behandelnde Gas durch eine Hilfskältequelle (28) abzukühlen.

3. Verfahren nach Anspruch 1, **dadurch gekennzeichnet, dass** der Schritt (d) des Hilfskühlens darin besteht, das zu behandelnde Gas durch mindestens einen Teil des Regenerationsfluidstroms, der den Adsorber durchquert, abzukühlen.

4. Verfahren nach einem der Ansprüche 1 bis 3, **dadurch gekennzeichnet, dass** man das Hilfsabkühlen in dem Wärmeaustauscher (3') durchführt.

5. Verfahren nach einem der Ansprüche 1 bis 3, **dadurch gekennzeichnet, dass** man das Kühlen außerhalb des Wärmeaustauschers (3') durchführt.

6. Verfahren nach Anspruch 5, **dadurch gekennzeichnet, dass** man einen Durchfluss des zu behandelnden Gases und des Regenerationsfluids in dem Wärmeaustauscher (3') während des Schritts (d) des Hilfskühlens aufrechterhält.

7. Verfahren nach einem der Ansprüche 1 bis 6, **dadurch gekennzeichnet, dass** es ferner einen Schritt aufweist, der darin besteht, das zu behandelnde Gas, das aus dem Schritt (c1) hervorgeht, zusätzlich abzukühlen, bevor man dieses zu behandelnde Gas durch den Adsorber (7, 8) laufen lässt.

8. Verfahren nach einem der. Ansprüche 1 bis 7, **dadurch gekennzeichnet, dass** das zu behandelnde Gas atmosphärische Luft ist, und dass der Schritt (b) die Aufgabe hat, die zu behandelnde Luft, die aus dem Schritt (a) hervorgeht, von Wasser und Kohlendioxid zu reinigen, und dass das Verfahren einen zusätzlichen Schritt aufweist, der darin besteht, durch Destillation die aus dem Schritt (b) hervorgehende Luft abzuscheiden, um mindestens einen ihrer Bestandteile sowie ein Restgas zu erzeugen, und dass das Restgas das Regenerationsfluid bildet.

9. Gerät zur Behandlung eines Gases durch Adsorption, des Typs, der Folgendes aufweist:
- einen Verdichter (2) des zu behandelnden Gases, dessen Förderseite an den Eingang mindestens eines Adsorbers (7, 8) im Laufe einer Adsorptionsphase dieses angeschlossen werden kann,
- Mittel, um ein Regenerationsfluid in dem Adsorber (7, 8) im Laufe einer Regenerationsphase dieses zirkulieren zu lassen, und
- Mittel zum Erwärmen des Regenerationsfluids, das bei der Regeneration in den Adsorber (7, 8) eintritt,
wobei die Mittel zum Erwärmen einen Wärmeaustauscher (3, 3') aufweisen, der das Regenerationsfluid mit dem Gas, das aus dem Verdichter (2) hervorgeht, indirekt in Wärmeaustauschbeziehung bringen kann, und wobei das Gerät ferner Abzweigmittel (30) aufweist, um das Regenerationsfluid in den Adsorber (7, 8) in Regeneration zu leiten, ohne über den Wärmeaustauscher (3') zu laufen, und Hilfskühlmittel (28; 38), um das zu behandelnde Gas abzukühlen, wenn die Abzweigmittel (30) aktiviert sind,
**dadurch gekennzeichnet, dass** die Mittel zum Erwärmen ferner eine Hilfswärmequelle (14) aufweisen, die ein zusätzliches Erwärmen des Regenerationsfluids durchführen kann.

10. Gerät nach Anspruch 9, **dadurch gekennzeichnet, dass** die Hilfskühlmittel eine Hilfskältequelle (28) für mindestens den kalten Teil des Wärmeaustauschers (3') aufweisen.

11. Gerät nach Anspruch 9, **dadurch gekennzeichnet, dass** die Hilfskühlmittel eine Abzweigung (32) des Kreislaufs (5) des zu behandelnden Gases aufweisen, die auf die Klemmen des Wärmeaustauschers (3') montiert ist, versehen mit einer Hilfskältequelle (28).

12. Gerät nach Anspruch 9, **dadurch gekennzeichnet, dass** die Hilfskühlmittel eine Leitung (38) zum Rückführen des Regenerationsfluids, das den Adsorber (7, 8) in Regeneration durchquert hat, aufweisen.

13. Gerät nach einem der Ansprüche 9 bis 12, **dadurch gekennzeichnet, dass** die Hilfswärmequelle (14) mindestens den warmen Teil des Wärmeaustauschers (3') zusätzlich erwärmen kann.

14. Gerät nach einem der Ansprüche 9 bis 13, **dadurch gekennzeichnet, dass** es ferner zusätzliche Kühlmittel (3A; 3A') des zu behandelnden Gases aufweist, die zwischen dem Wärmeaustauscher (3; 3') und dem Adsorber (7, 8) angeordnet sind.

15. Gerät nach einem der Ansprüche 9 bis 13, **dadurch gekennzeichnet, dass** sich die Einheit, die von dem Verdichter (2) zu dem Adsorber (7, 8) führt, am Kopf einer Luftabscheideanlage durch Destillieren befindet, um mindestens einen der Bestandteile der Luft zu erzeugen, und dass der Adsorber (7, 8) dazu bestimmt ist, die zu behandelnde Luft von Wasser und Kohlendioxid zu reinigen, und dass das Regenerationsfluid aus einem Restgas besteht, das von dieser Abscheideanlage erzeugt wird.
